# EUROPEAN PATENT SPECIFICATION

(11) **EP 4 254 940 B1**
(45) Date of publication and mention of the grant of the patent: **28.01.2026**
(21) Application number: 21897791.6
(22) Date of filing: 16.11.2021
(51) Int. Cl.: H04N 5/74, G03B 21/00, G03B 21/14

(54) **PROJECTION DEVICE**
PROJEKTIONSVORRICHTUNG
DISPOSITIF DE PROJECTION

(30) Priority: 25.11.2020 JP 2020194837
(43) Date of publication of application: 04.10.2023
(73) Proprietor: Panasonic Intellectual Property Management Co., Ltd., Kadoma-shi, Osaka 571-0057 (JP)
(72) Inventor: NISHI, Tetsuya, Kadoma-shi, Osaka 571-0057 (JP); HAYASHI, Yuki, Kadoma-shi, Osaka 571-0057 (JP)
(74) Representative: Appelt, Christian W.
(86) International application number: PCT/JP2021/042025
(87) International publication number: WO 2022/113817

(56) References cited:
- WO-A1-2012/085990
- WO-A1-2016/104331
- WO-A1-2020/107123
- WO-A1-2020/202720
- WO-A1-2020/202720
- JP-A- 2005 070 415
- JP-A- 2005 354 232
- JP-A- 2008 046 314

## Description

### [Technical Field]

The present invention relates to a projection device.

### [Background Art]

Conventionally, projection devices that can project an image onto a screen, for example, have been known. As a technique related to projection devices, JP 2014-157174 A discloses a device that changes its projection angle when projecting an image.

WO 2020/202720 A1 discloses a projection system provided with a projection device that projects a drawing at each of a plurality of workplaces in a worksite.

WO 2020/107123 A1 discloses a projection device for displaying construction plans comprising a projector head having projection optics, a laser module, a first mirror galvanometer redirecting incident light from the laser module toward a second mirror galvanometer that redirects further the incident light toward the projection optics.

### [Summary of Invention]

### [Technical Problem]

However, in the technique described in PTL 1, when there is a desire to project an image toward, for example, a wide-open, indoor space at a wide projection angle and a high degree of accuracy, it may not be possible to accurately project the image.

In view of this, the present invention has an object to provide a projection device which, by performing image correction with a high degree of accuracy, can project an image at a target position with reduced error, even when projecting images across a wide-open space at a wide projection angle.

### [Solution to Problem]

In order to achieve the above-mentioned object, a projection device according to the invention is defined by the appended claims.

### [Advantageous Effects of Invention]

According to the present invention, by performing image correction with a high degree of accuracy, errors in projecting an image at a target position can be reduced, even when projecting images across a wide-open space at a wide projection angle.

### [Brief Description of Drawings]

[FIG. 1]

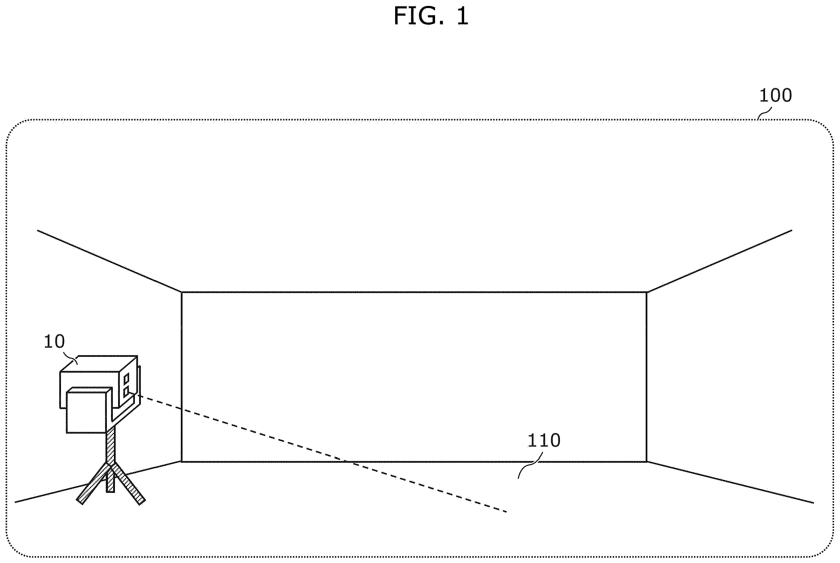

   FIG. 1 is a diagram of an overview of a projection device according to an embodiment.
[FIG. 2A]

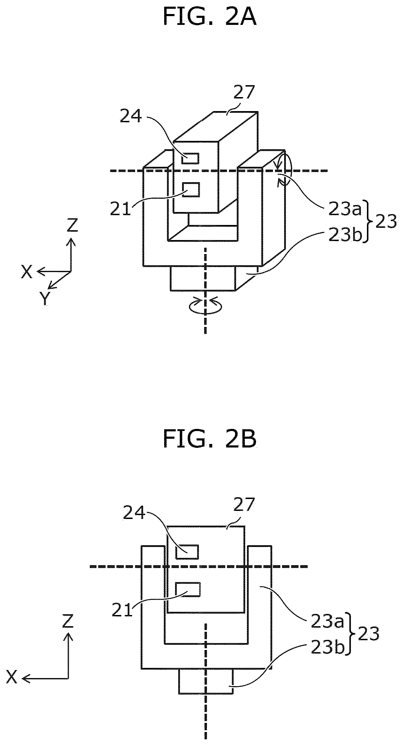

   FIG. 2A is an external perspective view of the projection device according to the embodiment.
[FIG. 2B]
   FIG. 2B is a front view of the projection device according to the embodiment.
[FIG. 2C]

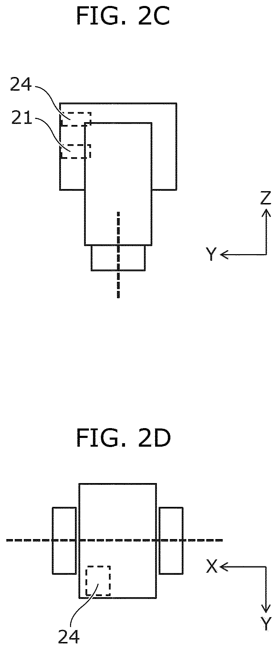

   FIG. 2C is a right-side view of the projection device according to the embodiment.
[FIG. 2D]
   FIG. 2D is a top view of the projection device according to the embodiment.
[FIG. 3]

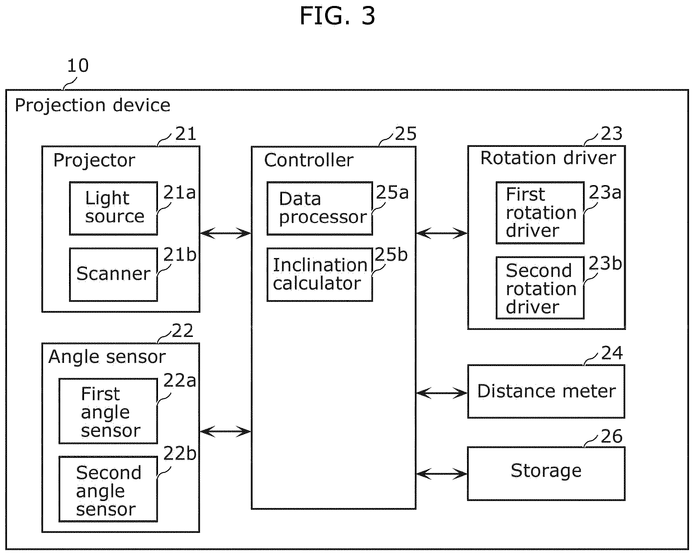

   FIG. 3 is a block diagram of a functional configuration of the projection device according to the embodiment.
[FIG. 4]

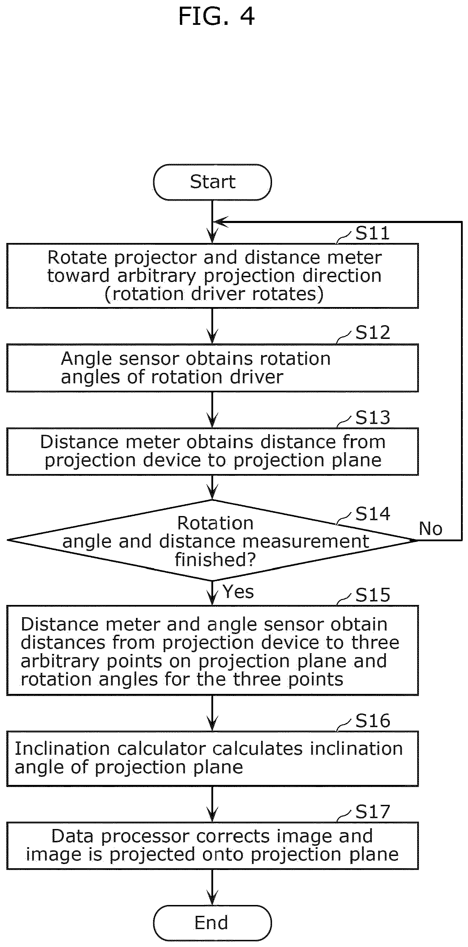

   FIG. 4 is a flowchart of an operation example of the projection device according to the embodiment.
[FIG. 5]

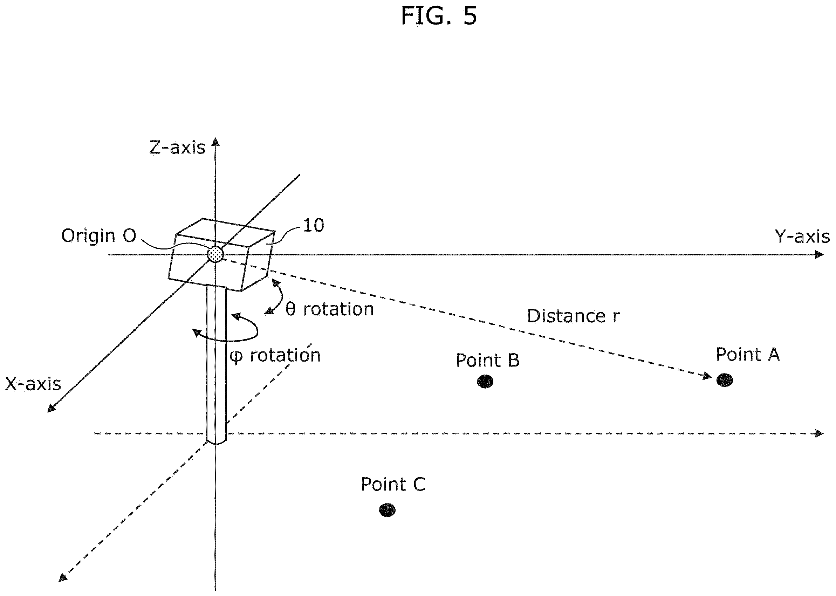

   FIG. 5 is a diagram of coordinate axes of orthogonal coordinates within a space.
[FIG. 6A]

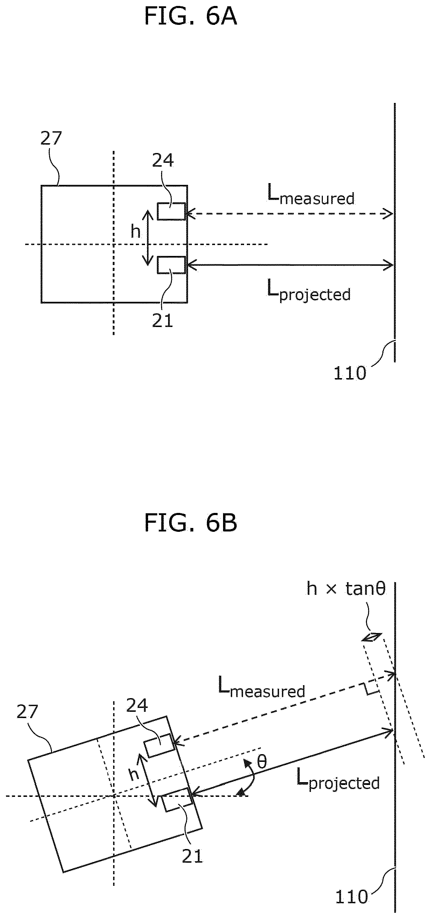

   FIG. 6A is a diagram of a state before a positional relationship between the projection device according to the embodiment and a projection plane is changed.
[FIG. 6B]
   FIG. 6B is a diagram of a state after the positional relationship between the projection device according to the embodiment and the projection plane is changed.
[FIG. 7A]

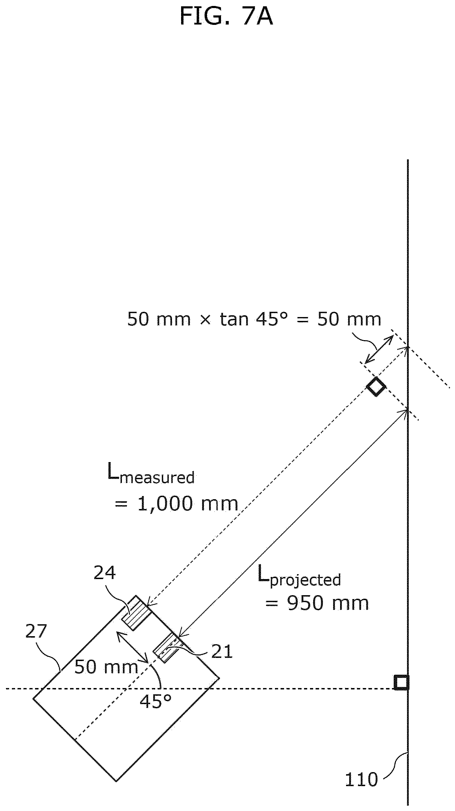

   FIG. 7A is a diagram of a specific example of the positional relationship illustrated in FIG. 6B.
[FIG. 7B]

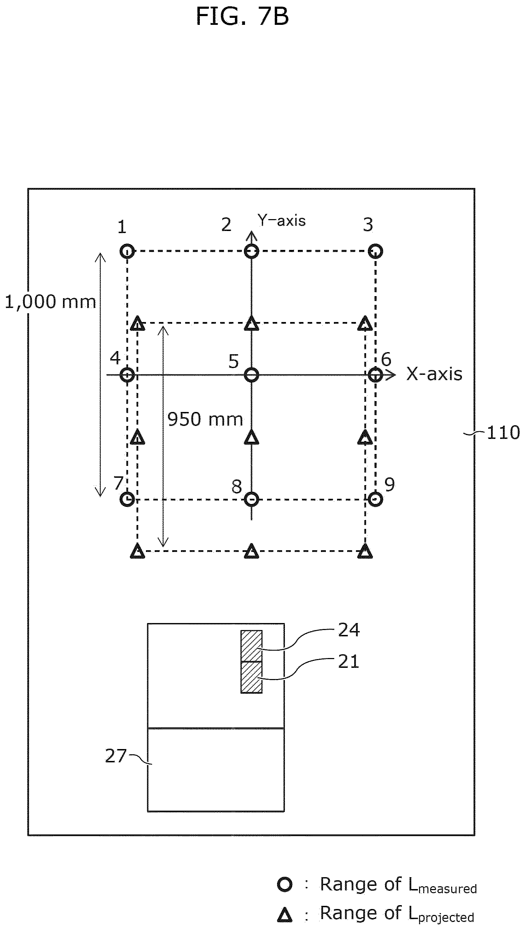

   FIG. 7B is a plan view of the projection plane illustrated in FIG. 7A viewed from the front.
[FIG. 8]

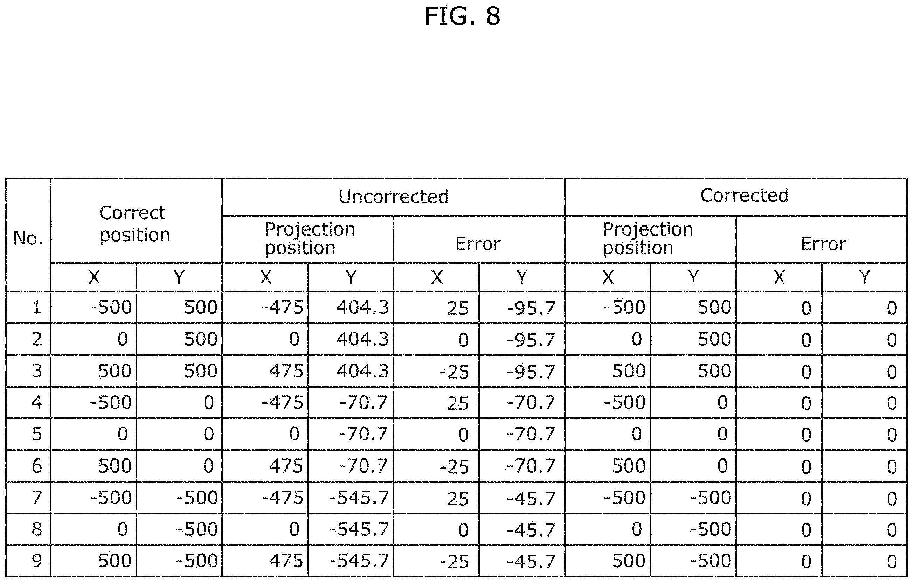

   FIG. 8 is a table that illustrates the error for each measurement point illustrated in FIG. 7B.

### [Description of Embodiment]

Hereinafter, an embodiment will be described in detail with reference to the drawings. However, the embodiment described below is merely one example of various embodiments of the present invention. In accordance with the design, or the like, various modifications can be made to the following embodiment within the scope of the invention as defined by the appended claims. It should be noted that the respective figures described in the following embodiment are schematic diagrams, and elements that are not needed to describe the present invention have been omitted. Furthermore, in the respective figures, elements that are substantially the same are given the same reference signs, and redundant descriptions may be omitted or simplified. It should be noted that the accompanying drawings and the following descriptions are provided to assist those skilled in the art in gaining a thorough understanding of the present invention, and are not intended to limit the scope of the subject matter recited in the Claims.

### (1) Overview

First, an overview of projection device 10 according to an embodiment will be described. FIG. 1 is a diagram of an overview of the operation of projection device 10 according to the embodiment. Projection device 10 according to the embodiment is placed inside of space 100 in a building under construction, for example. Using a structure (specifically, a floor, a wall, or a ceiling, or the like) that forms space 100 as projection plane 110, for example, projection device 10 projects, onto projection plane 110, a light for assisting construction work during construction of the structure. The contents projected include light indicating a location at which a bolt should be driven into a floor or light indicating a location at which a screw should be driven into a wall, or the like. By inputting such locations to projection device 10 as an image in advance, projection device 10 can project light onto the locations at which a worker should perform work in accordance with the design of the structure being built. That is to say, projection device 10 projects, as an image, light for assisting marking work. As a result, the worker does not need to identify the work locations on his/her own, and the worker need only perform work on the locations at which light is being projected, thereby facilitating such construction work.

That being said, for the image projected from projection device 10, a projection error in which the actual projection position is different from the desired projection position occurs. Here, when projection device 10 projects an image at a wide projection angle across a wide-open space 100, such as the interior of a building under construction, as described above, since the position of projection plane 110 is far from projection device 10, the error (projection error) between the intended projection position of the image and the actual projection position on projection plane 110 becomes large. In view of this, the configuration and operation of projection device 10 having a function of accurately correcting an image to be projected in order to enable highly-accurate, wide-area projection at the intended position, will be described.

### (2) Configuration

A configuration of projection device 10 according to the embodiment will be described. FIG. 1 illustrates a situation where light emitted by projection device 10 is projected onto projection plane 110. FIG. 2A to FIG. 2D are diagrams of the external appearance of projection device 10. FIG. 2A to FIG. 2D respectively illustrate an external perspective view, front view, right-side view, and top view of projection device 10. FIG. 3 is a block diagram of a functional configuration of projection device 10.

As illustrated in FIG. 1 to FIG. 3, projection device 10 is a device that projects an image onto projection plane 110. Projection device 10 is attached to a tripod, for example, and placed on a floor. Furthermore, projection device 10 need not be attached to a tripod, and may be attached to a wall or placed on a table. When projection device 10 is attached to a wall or placed on a table, projection device 10 is attached by using attachment components not shown in the figures.

In particular, for FIG. 2A to FIG. 2D and FIG. 5, the configuration of projection device 10 according to the embodiment will be described with the Z direction being set as the vertically upward direction and the X direction and Y direction each being set to be orthogonal to the Z direction. Furthermore, there are instances where the XZ plane is described as a front view of projection device 10.

Projection device 10 includes projector 21, angle sensor 22, rotation driver 23, distance meter 24, controller 25, and storage 26.

Projector 21 is a projection module for projecting an image onto projection plane 110. Projector 21 includes light source 21a and scanner 21b. Although not shown in the figures, note that projector 21 includes other optical components, such as a lens, a mirror, or the like.

Light source 21a is a laser light source implemented by a semiconductor light-emitting element, for example. It should be noted that light source 21a may include multiple light-emitting elements that emit lights of different colors (e.g., a red light-emitting element, a green light-emitting element, and a blue light-emitting element), and may have a configuration that can switch the color of light emitted.

Scanner 21b is a mechanism that projects light onto projection plane 110 by scanning the light emitted by light source 21a, and may be implemented by a micro electro-mechanical system (MEMS) mirror, for example.

Projector 21 is an integrated module that includes light source 21a and scanner 21b, and is provided in the vicinity of the outer shell of housing 27.

Distance meter 24 measures the distance from projection device 10 to the structure that constitutes projection plane 110. Distance meter 24 is a distance measurement sensor, such as a time of flight (TOF) sensor, for example. Distance meter 24 may, for example, be a distance measurement sensor that uses a phase-difference detection method, a distance measurement sensor that uses a triangulation distance measurement method, or other type of distance measurement sensor. Distance meter 24 includes a light source for distance measurement and a light-absorbing element, such as a photodiode, or the like. The light source for distance measurement is a light source that emits light toward a structure. The light source for distance measurement is implemented by a light-emitting element that emits infrared light, for example, but may be implemented by a light-emitting element that emits visible light. As described later, distance meter 24 has a laser pointer function for indicating the current distance measurement target point to a user. Although this function is implemented, for example, by a light source separate from the light source for distance measurement, when the light source for distance measurement emits visible light, the function may be implemented by the light source for distance measurement.

Rotation driver 23 is a rotation mechanism for changing the orientation of projection device 10 (i.e., the orientation and angles of distance meter 24). Rotation driver 23 includes first rotation driver 23a for changing the orientation of projection device 10 in the tilt direction and second rotation driver 23b for changing the orientation of projection device 10 in the pan direction. In FIG. 2A to FIG. 2D, the dashed lines drawn in the X direction represent a center line of the rotation axis of first rotation driver 23a. The dashed lines drawn in the Z direction represent the center line of the rotation axis of second rotation driver 23b. First rotation driver 23a and second rotation driver 23b are each implemented by stepper motors, or the like. It should be noted that rotation driver 23 may include a third rotation driver for changing the orientation of projection device 10 in the roll direction. In the present embodiment, while rotation driver 23 forms an approximate U-shape in a front view, where first rotation driver 23a is disposed on both ends in the approximate U-shape, and second rotation driver 23b is disposed at the base of the approximate U-shape, rotation driver 23 is not limited to this shape. Rotation driver 23 may be any shape as long as rotation in the tilt direction and the pan direction are possible. Furthermore, in the present embodiment, distance meter 24 and projector 21 are each disposed at positions that are offset from the center lines of the rotation axes of first rotation driver 23a and second rotation driver 23b.

Angle sensor 22 measures the orientation of projection device 10 (i.e., the orientation and angles of distance meter 24). Specifically, angle sensor 22 is an angle sensor that measures the drive amount of rotation driver 23. Angle sensor 22 includes first angle sensor 22a that measures the angle of first rotation driver 23a that rotates in the tilt direction and second angle sensor 22b that measures the angle of second rotation driver 23b that rotates in the pan direction. It should be noted that when rotation driver 23 includes a third rotation driver for changing the orientation of projection device 10 in the roll direction, angle sensor 22 may measure the roll angle as a drive amount of rotation driver 23.

Controller 25 is a control device that controls individual components of projection device 10 including projector 21 and rotation driver 23 in order to project an image onto projection plane 110. Controller 25 includes data processor 25a and inclination calculator 25b as functional components. Data processor 25a corrects the image to be projected by using information on the rotation angles of rotation driver 23 measured by angle sensor 22 and the distance measured by distance meter 24. Details of the correction will be described later. Furthermore, inclination calculator 25b calculates the inclination angle of projection plane 110 based on the distances from projection device 10 to at least 3 arbitrary points on projection plane 110. Details of the calculation will be described later.

Controller 25 is implemented by a microcomputer or processor, for example. Furthermore, controller 25 may include a drive circuit for driving projector 21 and a drive circuit for driving rotation driver 23, or controller 25 may include a drive circuit for driving distance meter 24.

Storage 26 is a storage device implemented by semiconductor memory, for example. Storage 26 stores an image to be projected onto projection plane 110, a program for implementing data processor 25a of controller 25, a program to control other elements of projection device 10, information temporarily required for control performed by controller 25, information measured by angle sensor 22 and distance meter 24, and information generated by data processor 25a, and the like. Furthermore, storage 26 stores information on the positional relationship between distance meter 24 and projector 21.

Housing 27 is a housing that houses projector 21, angle sensor 22, distance meter 24, controller 25, and storage 26. Housing 27 is formed from resin, for example, but may be formed from metal. Furthermore, in the present embodiment, housing 27 is of a rectangular-cuboid shape, and is disposed in the gap between the opposing ends of the approximate U-shape formed by rotation driver 23 in a front view. As long as housing 27 is connected to rotation driver 23 and can be rotated in the tilt direction and pan direction, housing 27 is not limited to such a shape and arrangement.

While distance meter 24 has been described as being housed in housing 27, distance meter 24 does not necessarily need to be housed in housing 27, and distance meter 24 may, for example, be fixed to the outside of housing 27.

It should be noted that projection device 10 may include a display component and operation component that are not shown in the figures. Accordingly, a user can check the status related to projection device 10 that is displayed on the display component. Furthermore, a user can operate and drive the individual components of projection device 10 by operating the operation component. In this case, the display component is a liquid crystal display (LCD), or the like. The operation component is an input device, such as a touch panel or keyboard.

It should be noted that projection device 10 may include a communication component that is not shown in the figures. Projection device 10 may be driven by operations performed on an external electronic device by sending instructions from the external electronic device to controller 25 via the communication component by wired or wireless communication. In such a case, there are no particular limitations on the communication standard used in the wired or wireless communication by the communication component, and any method may be used.

With the above-mentioned configuration, projection device 10 can project as an image, onto projection plane 110, light for assisting in work performed during the construction of a structure.

### (3) Operation Example

Next, an operation example of projection device 10 will be described. FIG. 4 is a flowchart of an operation example of projection device 10. In the following description of the operation example, coordinate axes of orthogonal coordinates are set in space 100 as illustrated in FIG. 5. FIG. 5 is a diagram illustrating coordinate axes of orthogonal coordinates in space 100. The coordinate axes illustrated in FIG. 5 are determined with the position of projection device 10 (more specifically, a predetermined position near projector 21 and distance meter 24 in projection device 10) as origin O. In this operation example, description is carried out assuming that origin O is the position at which the center line of the rotation axis of first rotation driver 23a and the center line of the rotation axis of second rotation driver 23b intersect. Furthermore, in the description of the following operation example, it is assumed that projection plane 110 is a floor surface and that a user is operating projection device 10 using an external electronic device.

First, a user places projection device 10 in space 100 and rotates rotation driver 23 at arbitrary angles to point housing 27 that includes projector 21 and distance meter 24 toward the desired direction for projecting onto projection plane 110 (S11).

Next, angle sensor 22 measures and obtains the rotation angles of rotation driver 23 at the point in time when the process for step S11 was completed (S12). Specifically, first angle sensor 22a measures tilt angle θ of first rotation driver 23a. Second angle sensor 22b measures pan angle φ of second rotation driver 23b. The tilt angle θ and pan angle φ obtained through these measurements are stored in storage 26.

Next, distance meter 24 measures and obtains the distance from projection device 10 to projection plane 110 according to their positional relationship at the point in time when the process for step S11 was completed (S13). Specifically, distance meter 24 measures and obtains the straight-line distance between distance meter 24 and projection plane 110 (L_{measured}) as shown in FIG. 6A and FIG. 6B. As illustrated in FIG. 6A and FIG. 6B, in the present embodiment, distance meter 24 and projector 21 are disposed separated from each other by distance h. As a result, as illustrated in FIG. 6A, when distance meter 24 and projector 21 are perpendicular to projection plane 110 (tilt angle θ of distance meter 24 and projector 21 relative to projection plane 110 is zero), the straight-line distance between distance meter 24 and projection plane 110 (L_{measured}) is equal to the straight-line distance between projector 21 and projection plane 110 (L_{projected}).

However, as illustrated in FIG. 6B, when distance meter 24 and projector 21 form tilt angle θ relative to projection plane 110 (tilt angle θ of distance meter 24 and projector 21 relative to projection plane 110 is not zero), L_{measured} equals L_{projected} plus the length of distance h x tanθ. In the image correction described later, corrective calculations are performed that take into consideration the difference between L_{measured} and L_{projected} resulting from such a relative angle formed between projection device 10 and projection plane 110. Furthermore, corrective calculations are performed that also take into consideration the positional relationship where projector 21 and distance meter 24 are offset from the center lines of the rotation axes of first rotation driver 23a and second rotation driver 23b.

Next, controller 25 checks whether measurement of the rotation angles of rotation driver 23 and the distance from distance meter 24 to projection plane 110 (L_{measured}) is complete (S14). If measurement of the rotation angles and L_{measured} is not complete ("No" for S14), the process returns to step S11, and the above-mentioned process is performed again.

If measurement of the rotation angles and L_{measured} is complete ("Yes" for S14), distance meter 24 measures the distances from projection device 10 to three arbitrary measurement points on projection plane 110 that are not aligned in a straight line, and angle sensor 22 obtains the rotation angles of rotation driver 23 for each of the three points (S15). FIG. 5 is a diagram illustrating the three points, namely, point A, point B, and point C, for which distances and the rotation angles of rotation driver 23 are obtained in S15. Of these, point A is a point for which a distance and rotation angles of rotation driver 23 have been obtained over the course of the processes leading up to S14, and distances and rotation angles of rotation driver 23 are further measured and obtained for arbitrary point B and point C.

When doing so, point B and point C are selected so that point A, point B, and point C are not aligned in a straight line. For example, arbitrary point B is selected starting from a state where distance meter 24 is pointed at point A of projection plane 110 based on the rotation angles of rotation driver 23 at the point in time when the process for step S14 was completed, and first rotation driver 23a and second rotation driver 23b are then rotated so that distance meter 24 is pointed at point B. Once distance meter 24 is in a state where it is pointed at point B, distance meter 24 measures the distance from distance meter 24 to point B and the distance is stored in storage 26. Furthermore, angle sensor 22 measures tilt angle θ and pan angle φ of rotation driver 23 while in this state and the angles are stored in storage 26. Likewise for point C, once information on the distance and angles for point B is obtained, rotation driver 23 rotates so that distance meter 24 is pointed at point C, and the distance from distance meter 24 to point C and the rotation angles of rotation driver 23 at that time are obtained and stored in storage 26. The selection of point B and point C may be performed by the user sending instructions by operating projection device 10 while checking a laser pointer light emitted from distance meter 24. Alternatively, the selection may be performed automatically according to a program that has been stored in advance in storage 26.

Next, inclination calculator 25b calculates the inclination angle of projection plane 110 (S16). Inclination calculator 25b calculates orthogonal coordinates (x, y, and z coordinates) of the three measurement points based on stored information (specifically, measurement results for the distances and rotation angles, as well as the positional relationship between distance meter 24 and projector 21). FIG. 5 is a diagram of the polar coordinates and orthogonal coordinates of the three measurement points.

To calculate the orthogonal coordinates of the three measurement points, inclination calculator 25b first calculates the polar coordinates of the three measurement points. In order to calculate the polar coordinates, inclination calculator 25b calculates distance r from each of the three measurement points to origin O, from the distance information measured by distance meter 24 and stored in storage 26, as well as information on the positional relationship between distance meter 24 and projector 21 stored in storage 26. The distance information measured by distance meter 24 indicates the distances from distance meter 24 to the measurement points. Distance r from origin O to each measurement point is calculated by using the information on the positional relationship between distance meter 24 and projector 21 (information on this positional relationship also includes the positional relationship between origin O, distance meter 24, and projector 21) together with this distance information measured by distance meter 24. In other words, distances r are calculated in a manner that reflects the error from the positional relationship where distance meter 24 and projector 21 are offset from the center lines of the rotation axes of first rotation driver 23a and second rotation driver 23b. The polar coordinates of the three measurement points are calculated by combining distance r calculated as described above with pan angle φ and tilt angle θ measured for each measurement point.

Once the polar coordinates are calculated, inclination calculator 25b converts the polar coordinates calculated for the three measurement points to orthogonal coordinates.

Once the orthogonal coordinates of the three measurement points are calculated, inclination calculator 25b calculates, using the orthogonal coordinates of the three measurement points, the distance from projection device 10 to projection plane 110 (i.e., a plane that passes through measurement point A, measurement point B, and measurement point C) and the inclination angle of projection plane 110 relative to projection device 10. Assuming that the equation for projection plane 110 is ax + by + cz = d, where the coordinates for point A are (xa, ya, za), the coordinates for point B are (xb, yb, zb), and the coordinates for point C are (xc, yc, zc), inclination calculator 25b calculates, from this information, the normal vector of projection plane 110, which is n = (a, b, c). Normal vector n indicates the inclination angle of projection plane 110 in orthogonal coordinates, and the length of normal vector n indicates the distance from projection device 10 to projection plane 110. That is to say, calculating normal vector n is equivalent to calculating the distance from projection device 10 to projection plane 110 and the inclination angle of projection plane 110 relative to projection device 10.

Next, data processor 25a corrects the image to be projected based on the distances measured by distance meter 24 from projection device 10 to the respective points, the rotation angles of rotation driver 23 at that time, and the inclination angle of projection plane 110 calculated by inclination calculator 25b, and the corrected image is projected from projector 21 (S17). Specifically, data processor 25a corrects distortion of the image according to the calculated inclination angle of projection plane 110 and rotation angles of rotation driver 23, and corrects the projection scaling factor of the architectural drawing data based on the calculated distance to projection plane 110. Furthermore, in this correction, as described earlier, when distance meter 24 and projector 21 form an angle with projection plane 110, corrections are performed taking into account the fact that the straight-line distance (L_{measured}) between distance meter 24 and projection plane 110 and the straight-line distance (L_{projected}) between projector 21 and projection plane 110 are not equal to each other.

Due to the operation described in the above-mentioned operation example for projection device 10, even in a wide-open space 100 in a building under construction, an image can be projected at the intended position with a high degree of accuracy by performing highly accurate image correction. In projection device 10 in the present configuration, since image correction that also takes into consideration the inclination angle of projection plane 110 is performed by using information on tilt angles θ and pan angles φ of projection device 10 provided by first angle sensor 22a and second angle sensor 22b, highly accurate correction of the image to be projected can be performed.

Furthermore, in the calculation of the inclination angle of projection plane 110, the inclination angle of projection plane 110 is calculated in a manner which eliminates the error arising from the positional relationship between distance meter 24 and origin O where distance meter 24 and projector 21 are offset from the center lines of the rotation axes of first rotation driver 23a and second rotation driver 23b. As a result, the calculation of the inclination angle of projection plane 110 can be performed with a high degree of accuracy, and thus correction of the image to be projected can also be performed with high accuracy.

Furthermore, in the correction of the image to be projected, when distance meter 24 and projector 21 form a relative tilt angle θ with projection plane 110, for the straight-line distance (L_{measured}) between distance meter 24 and projection plane 110 and the straight-line distance (L_{projected}) between projector 21 and projection plane 110, correction to rectify distance measurement error caused by the positional relationship between distance meter 24 and projector 21 is performed where L_{measured} is equal to L_{projected} plus the length of distance h × tanθ. Accordingly, correction of the image to be projected can be performed with a high degree of accuracy.

Here, a specific example will be given to describe the advantageous effects of projection device 10 according to the present embodiment. FIG. 7A is a diagram of a specific example of the positional relationship shown in FIG. 6B. As illustrated in FIG. 7A, an example will be described where distance h between projector 21 and distance meter 24 is 50 mm, tilt angle θ is 45°, and distance L_{measured} measured by distance meter 24 is 1,000 mm. In this case, L_{projected}, which is the straight-line distance between projector 21 and projection plane 110, is 950 mm. As described earlier, this is due to L_{projected} being shorter than L_{measured} by h × tanθ = 50 mm × tan45° = 50 mm. In this manner, there is a 50 mm error between L_{measured} and L_{projected}.

FIG. 7B is a plan view of projection plane 110 shown in FIG. 7A viewed from the front. In this case, it is assumed that projector 21 is projecting a square image in which 1 side measures 1,000 mm onto projection plane 110 based on L_{measured} without performing correction on the image. In FIG. 7B, the image to be projected from projector 21 is represented by a square indicated by the dashed lines passing through eight circular symbols. It should be noted that nine circular symbols shown in FIG. 7B assigned with identification numbers from "1" to "9" represent the four vertices, the four midpoints of each side, and the center of the square.

In the case where the above-described correction that takes into consideration the 50 mm error is not performed, since projection plane 110 is actually positioned so that L_{projected} = 950 mm, each of the nine circular symbols is instead projected at the position indicated by a corresponding one of the nine triangular symbols. Specifically, the uncorrected image is projected at a scale of 950/1,000 and a position that is shifted toward the minus-side of the Y-axis by 50 mm / cos45° ≈ 70.7 mm. The specific corresponding relationship of how the circular symbols and triangular symbols correspond to each other is as illustrated in FIG. 8.

Such a degree of error can be tolerated in projection devices for entertainment or presentation use. However, for projection device 10 that is used at construction sites and projects guide lights to indicate work locations, projection errors cannot be tolerated since they will result in the construction of structures that do not conform to the dimensions given in their design. Since projection device 10 according to the present embodiment performs image correction based on distances and rotation angles, as described above, correction of the image to be projected can be performed with a high degree of accuracy.

Furthermore, in the present embodiment, distance meter 24 and projector 21 are each disposed at positions that are offset from the center lines of the rotation axes of first rotation driver 23a and second rotation driver 23b. Due to this positional relationship between distance meter 24 and projector 21, a balanced weight distribution can be achieved inside housing 27, including the electronic substrate (not shown in the figures) for driving projection device 10. As a result, the force required by rotation driver 23 to rotate housing 27 can be reduced, thereby allowing the device configuration of projection device 10 to be simplified and miniaturized.

As shown above, an embodiment according to the present invention has been described with reference to the drawings. However, the scope of the present invention is not limited by the foregoing description. Various variations and modifications can be made to the present invention within the essence of the present invention as described in the Claims. For example, although a laser-scanning projection device is described for the embodiment of the present invention, the present invention may be implemented as a different type of projection device. Furthermore, the projection device may be implemented as a client-server system. In this case, part of the processes described as being performed by the projection device in the above-mentioned embodiment is performed by a server device by transmitting and receiving information via a communication component.

Furthermore, the configuration described in the above-mentioned operation example is merely an example, and the present invention is not limited to the foregoing configuration. For example, various variations and modifications may be made to the sequence and the contents of the processes of the individual steps indicated by reference signs marked with an "S" as long as there is no deviation in the advantageous effects of the present invention. Forms obtained through various modifications to the foregoing embodiments that can be conceived by those skilled in the art, as well as forms realized by combining elements and functions in the foregoing embodiments. The scope of the invention is defined by the appended claims. invention.

### [Industrial Applicability]

The present invention can be suitably utilized when projecting, in a relatively wide-open space, such as in a building under construction, for example, an image indicating work locations at which workers should perform work.

### [Reference Signs List]

- 10: projection device
- 21: projector
- 22: angle sensor
- 22a: first angle sensor
- 22b: second angle sensor
- 23: rotation driver
- 23a: first rotation driver
- 23b: second rotation driver
- 24: distance meter
- 25: controller
- 25a: data processor
- 25b: inclination calculator
- 26: storage
- 27: housing
- 100: space
- 110: projection plane

## Claims

1. A projection device (10) for use at a construction site, the projection device (10) comprising:
a projector (21) that projects an image onto a projection plane (110);
a distance meter (24) that measures a distance to the projection plane (110);
a rotation driver (23) that rotates the projector (21) and the distance meter (24);
an angle sensor (22) that measures a rotation angle of the rotation driver (23); and
a data processor (25a) that corrects the image that is projected from the projector (21), wherein
at least one of the distance meter (24) or the projector (21) is offset from a center line of a rotation axis of the rotation driver (23), and
the data processor (25a) corrects the image by using the distance measured by the distance meter (24) and the rotation angle measured by the angle sensor (22),
wherein the projection device (10) further comprises
an inclination calculator (25b) that calculates an inclination angle of the projection plane (110), wherein
the inclination calculator (25b) calculates the inclination angle of the projection plane (110) based on distances measured by the distance meter (24) for at least three arbitrary points on the projection plane (110) that are not aligned in a straight line, and rotation angles measured by the angle sensor (22) for the at least three arbitrary points,
wherein the projection device (10) is **characterized in that** the inclination calculator (25b) calculates the inclination angle of the projection plane (110) further based on a positional relationship between the distance meter (24) and the projector (21), and
the data processor (25a) further corrects the image based on the inclination angle of the projection plane (110), wherein, in the correction of the image, the data processor (25a) performs correction to rectify a distance measurement error caused by the positional relationship between the distance meter (24) and the projector (21).

2. The projection device (10) according to claim 1, wherein
the rotation driver (23) includes a first rotation driver (23a) that rotates in a first direction and a second rotation driver (23b) that rotates in a second direction, and
the angle sensor (22) includes a first angle sensor (22a) that measures a rotation angle of the first rotation driver (23a) and a second angle sensor (22b) that measures a rotation angle of the second rotation driver (23b).

## Patentansprüche

1. Projektionsvorrichtung (10) zur Verwendung auf einer Baustelle, wobei die Projektionsvorrichtung (10) aufweist:
einen Projektor (21), der ein Bild auf eine Projektionsebene (110) projiziert;
einen Entfernungsmesser (24), der eine Entfernung zu der Projektionsebene (110) misst;
einen Drehantrieb (23), der den Projektor (21) und den Entfernungsmesser (24) dreht;
einen Winkelsensor (22), der einen Drehwinkel des Drehantriebs (23) misst; und
einen Datenprozessor (25a), der das Bild, das von dem Projektor (21) projiziert wird, korrigiert, wobei
mindestens eines von dem Entfernungsmesser (24) oder dem Projektor (21) gegenüber einer Mittellinie einer Drehachse des Drehantriebs (23) versetzt ist und
der Datenprozessor (25a) das Bild unter Verwendung der Entfernung, die von dem Entfernungsmesser (24) gemessen wird, und des Drehwinkels, der von dem Winkelsensor (22) gemessen wird, korrigiert,
wobei die Projektionsvorrichtung (10) ferner aufweist:
einen Neigungsrechner (25b), der einen Neigungswinkel der Projektionsebene (110) berechnet, wobei
der Neigungsrechner (25b) den Neigungswinkel der Projektionsebene (110) auf der Grundlage von Entfernungen, die von dem Entfernungsmesser (24) für mindestens drei beliebige Punkte auf der Projektionsebene (110), die nicht in einer geraden Linie ausgerichtet sind, und von Drehwinkeln, die von dem Winkelsensor (22) für die mindestens drei beliebigen Punkte gemessen werden, berechnet,
wobei die Projektionsvorrichtung (10) **dadurch gekennzeichnet ist, dass** der Neigungsrechner (25b) den Neigungswinkel der Projektionsebene (110) ferner auf der Grundlage einer Positionsbeziehung zwischen dem Entfernungsmesser (24) und dem Projektor (21) berechnet und
der Datenprozessor (25a) ferner das Bild auf der Grundlage des Neigungswinkels der Projektionsebene (110) korrigiert, wobei der Datenprozessor (25a) bei der Korrektur des Bildes eine Korrektur durchführt, um einen Entfernungsmessfehler zu berichtigen, der durch die Positionsbeziehung zwischen dem Entfernungsmesser (24) und dem Projektor (21) verursacht wird.

2. Projektionsvorrichtung (10) nach Anspruch 1, wobei
der Drehantrieb (23) einen ersten Drehantrieb (23a), der sich in einer ersten Richtung dreht, und einen zweiten Drehantrieb (23b), der sich in einer zweiten Richtung dreht, aufweist und
der Winkelsensor (22) einen ersten Winkelsensor (22a), der einen Drehwinkel des ersten Drehantriebs (23a) misst, und einen zweiten Winkelsensor (22b), der einen Drehwinkel des zweiten Drehantriebs (23b) misst, aufweist.

## Revendications

1. Dispositif de projection (10) destiné à être utilisé sur un chantier de construction, le dispositif de projection (10) comprenant :
un projecteur (21) qui projette une image sur un plan de projection (110) ;
un télémètre (24) qui mesure une distance jusqu'au plan de projection (110) ;
un module d'entraînement en rotation (23) qui fait tourner le projecteur (21) et le télémètre (24) ;
un capteur d'angle (22) qui mesure un angle de rotation du module d'entraînement en rotation (23) ; et
un processeur de données (25a) qui corrige l'image qui est projetée par le projecteur (21), dans lequel
au moins l'un parmi le télémètre (24) et le projecteur (21) est décalé par rapport à une ligne centrale d'un axe de rotation du module d'entraînement en rotation (23), et
le processeur de données (25a) corrige l'image en utilisant la distance mesurée par le télémètre (24) et l'angle de rotation mesuré par le capteur d'angle (22),
dans lequel le dispositif de projection (10) comprend en outre
un calculateur d'inclinaison (25b) qui calcule un angle d'inclinaison du plan de projection (110), dans lequel
le calculateur d'inclinaison (25b) calcule l'angle d'inclinaison du plan de projection (110) sur la base des distances mesurées par le télémètre (24) pour au moins trois points arbitraires sur le plan de projection (110) qui ne sont pas alignés en ligne droite, et sur la base des angles de rotation mesurés par le capteur d'angle (22) pour les au moins trois points arbitraires,
dans lequel le dispositif de projection (10) est **caractérisé en ce que** le calculateur d'inclinaison (25b) calcule l'angle d'inclinaison du plan de projection (110) en outre sur la base d'une relation de position entre le télémètre (24) et le projecteur (21), et
le processeur de données (25a) corrige en outre l'image sur la base de l'angle d'inclinaison du plan de projection (110), dans lequel, lors de la correction de l'image, le processeur de données (25a) effectue une correction pour rectifier une erreur de mesure de distance causée par la relation de position entre le télémètre (24) et le projecteur (21).

2. Dispositif de projection (10) selon la revendication 1, dans lequel
le module d'entraînement en rotation (23) comprend un premier module d'entraînement en rotation (23a) qui tourne dans une première direction et un deuxième module d'entraînement en rotation (23b) qui tourne dans une deuxième direction, et
le capteur d'angle (22) comprend un premier capteur d'angle (22a) qui mesure un angle de rotation du premier module d'entraînement en rotation (23a) et un deuxième capteur d'angle (22b) qui mesure un angle de rotation du deuxième module d'entraînement en rotation (23b).
